(19) **Europäisches Patentamt / European Patent Office / Office européen des brevets**

(11) **EP 3 172 132 B1**

(12) **FASCICULE DE BREVET EUROPEEN**

(45) Date de publication et mention
de la délivrance du brevet:
**29.08.2018 Bulletin 2018/35**

(21) Numéro de dépôt: **15742245.2**

(22) Date de dépôt: **24.07.2015**

(51) Int Cl.:
**B64D 45/02** *(2006.01)* **H02G 13/00** *(2006.01)*

(86) Numéro de dépôt international:
**PCT/EP2015/067060**

(87) Numéro de publication internationale:
**WO 2016/012614 (28.01.2016 Gazette 2016/04)**

(54) **DISPOSITIF DE PROTECTION CONTRE LA FOUDRE**

VORRICHTUNG FÜR BLITZSCHUTZ

DEVICE FOR PROTECTION AGAINST LIGHTNING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.07.2014 FR 1457223**

(43) Date de publication de la demande:
**31.05.2017 Bulletin 2017/22**

(73) Titulaire: **ArianeGroup SAS
75015 Paris (FR)**

(72) Inventeurs:
• **ASPAS PUERTOLAS, Jesus
F-75007 Paris (FR)**
• **COUDEYRE, Damien
F-33300 Bordeaux (FR)**

• **FARGEOT, Sylvie
F-33200 Bordeaux (FR)**
• **SELLIER, Alexandre
F-08430 Raillicourt (FR)**
• **DE LUSTRAC, André
F-92330 Sceaux (FR)**
• **PIAU, Gérard Pascal
F-78790 Courgent (FR)**

(74) Mandataire: **Brevalex
95, rue d'Amsterdam
75378 Paris Cedex 8 (FR)**

(56) Documents cités:
**WO-A2-2005/071788    WO-A2-2013/097855
FR-A1- 2 995 734    US-A1- 2010 263 898**

**Description**

## DOMAINE TECHNIQUE

La présente invention se rapporte au domaine des structures exposées à la foudre et concerne plus particulièrement un dispositif de protection d'une telle structure contre la foudre.

L'invention concerne en particulier une éolienne et un aéronef équipés d'un tel dispositif de protection contre la foudre.

Le dispositif de protection contre la foudre selon l'invention peut néanmoins être utilisé pour protéger tout autre type de structure susceptible d'être exposée à la foudre.

## ÉTAT DE LA TECHNIQUE ANTÉRIEURE

Les pales des éoliennes de dimensions dites moyennes, c'est à dire présentant une longueur comprise entre 10 mètres à 60 mètres environ, sont en général réalisées à partir d'une structure en matériau composite à base de fibres de verre.

La protection d'une pale d'une éolienne de ce type contre la foudre repose conventionnellement sur un système comportant des récepteurs de foudre métalliques affleurant la surface externe de la pale et répartis le long de celle-ci en étant reliés à un câble de descente électriquement conducteur s'étendant à l'intérieur de la pale le long du longeron interne de celle-ci et raccordé à des moyens de liaison à la Terre intégrés au moyeu du rotor de l'éolienne.

Ainsi, la foudre s'attache préférentiellement sur les récepteurs de foudre et est canalisée par le câble de descente jusqu'aux moyens de liaison à la Terre.

Toutefois, les progrès techniques en matière d'éolienne tendent à favoriser l'utilisation d'éoliennes de grandes dimensions, dont la longueur des pales peut dépasser 80 mètres.

Ces éoliennes constituent des édifices de grande hauteur, dépassant typiquement 200 mètres, pour lesquels il est connu que la foudre se manifeste essentiellement de manière ascendante, c'est à dire à partir de précurseurs circulant depuis l'édifice vers le nuage.

De plus, pour garantir la tenue mécanique des pales de telles éoliennes, la structure de ces pales intègre des matériaux composites à base de fibres de carbone, appréciées pour leurs propriétés mécaniques plus avantageuses que les fibres de verre.

Or, les fibres de carbone présentent notamment une conductivité électrique considérablement supérieure à celle des fibres de verre. La conductivité électrique d'un matériau composite à base de fibres de carbone demeure néanmoins considérablement inférieure à celle d'un matériau métallique, et en tout état de cause trop faible pour être en mesure de disperser le courant électrique induit par un impact de foudre sans que la structure ne soit endommagée au-delà d'un niveau acceptable.

Il en résulte un risque de compétition entre les récepteurs de foudre et les régions de la pale comprenant des fibres de carbone, ainsi qu'un risque d'arc électrique à l'intérieur de la pale entre les régions comprenant des fibres de carbone et le câble de descente. Un tel arc électrique à l'intérieur de la pale est susceptible de provoquer l'explosion de la pale.

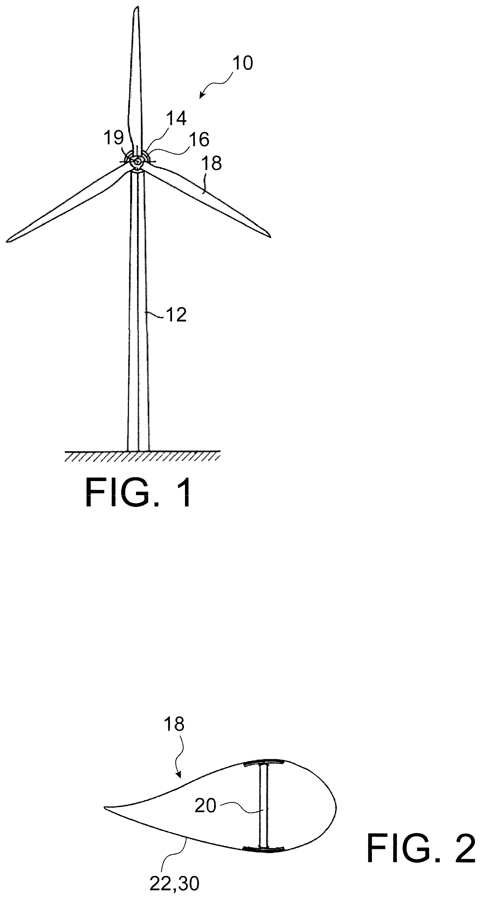

De plus, les pales des éoliennes perturbent les faisceaux RADAR utilisés par les systèmes RADAR civils et militaires au point d'entraver le fonctionnement de ces systèmes. Il est donc souhaitable de réduire la signature RADAR des pales d'éoliennes. WO2013/097855 divulgue un dispositif de protection contre la foudre destiné à former au moins une partie d'une surface externe (fig. 2) d'une structure à protéger.

## EXPOSÉ DE L'INVENTION

L'invention a notamment pour but d'apporter une solution simple, économique et efficace à ces problèmes.

Elle propose à cet effet un dispositif de protection contre la foudre destiné à former au moins une partie d'une surface externe d'une structure à protéger, comprenant un plan de masse, un substrat diélectrique agencé sur le plan de masse, et un ensemble de premiers éléments métalliques agencés sur le substrat diélectrique et s'étendant de manière sensiblement parallèle au plan de masse, de sorte que tout couple d'éléments consécutifs parmi lesdits premiers éléments métalliques est séparé d'une distance comprise entre 0.01 millimètre et 10 millimètres, lesdits premiers éléments métalliques étant répartis en des motifs semblables juxtaposés, chacun desdits motifs comportant des premiers éléments métalliques de dimensions différentes correspondant respectivement à des fréquences de résonance électromagnétique différentes dont la juxtaposition définit une bande d'absorption électromagnétique du motif.

Le dispositif de protection contre la foudre selon l'invention peut permettre un glissement de la foudre de proche en proche sur les premiers éléments métalliques, en particulier du fait du faible écartement entre ces premiers éléments métalliques. La foudre peut ainsi être déviée jusqu'à un dispositif récepteur adapté, sans endommager la structure à protéger.

De plus, la configuration du dispositif de protection contre la foudre lui confère des propriétés d'absorption vis-à-vis des ondes électromagnétiques dans une bande de fréquence déterminée par les dimensions des premiers éléments métalliques. Ces dimensions sont de préférence choisies pour permettre l'absorption d'ondes RADAR, typiquement autour de 5,6 GHz.

Le dispositif de protection contre la foudre permet ainsi de réduire la signature RADAR de la structure à protéger.

Ces propriétés d'absorption électromagnétique sont obtenues au moyen d'éléments agencés au niveau de la surface externe de la structure à protéger, comme cela apparaîtra plus clairement dans ce qui suit. De ce fait, ces éléments n'induisent aucun risque d'arc électrique au sein de la structure à protéger.

De préférence, tout couple d'éléments consécutifs parmi lesdits premiers éléments métalliques d'un même motif est séparé d'une distance comprise entre 0,3 millimètre et 3 millimètres.

De préférence, le dispositif comprend en outre une grille métallique formée d'un entrecroisement de pistes métalliques agencées sur le substrat diélectrique entre lesdits premiers éléments métalliques.

Une telle grille métallique forme un élément d'attache privilégié pour la foudre et permet de limiter les risques d'endommagement des premiers éléments métalliques par la foudre.

De préférence, lesdites pistes métalliques s'étendent entre lesdits motifs. Les pistes métalliques s'étendent ainsi dans le même plan que les premiers éléments métalliques.

Dans un mode de réalisation préféré de l'invention, le plan de masse est formé d'un grillage métallique continu. Par « continu », il faut comprendre que les brins du grillage sont ininterrompus d'une extrémité à l'autre du plan de masse.

Dans un autre mode de réalisation de l'invention, le plan de masse est formé d'un ensemble de portions de grillage régulièrement espacées les unes des autres. Le plan de masse présente ainsi un caractère discontinu.

Dans encore un autre mode de réalisation de l'invention, le plan de masse est formé d'une pluralité de seconds éléments métalliques espacés les uns des autres à intervalle régulier. Le plan de masse présente là encore un caractère discontinu.

Des expériences ont montré que l'utilisation d'un plan de masse discontinu peut permettre de réduire l'endommagement de la structure de la pale au niveau d'un point d'impact de foudre.

L'invention concerne également une pale pour éolienne, comprenant une peau extérieure aérodynamique intégrant au moins un dispositif du type décrit ci-dessus, dont ledit plan de masse est situé d'un côté intérieur de la pale tandis que ledit ensemble de premiers éléments métalliques est situé d'un côté extérieur de la pale.

La pale comporte de préférence des moyens de liaison à la Terre, et le cas échéant, la grille métallique est avantageusement connectée à ces moyens de liaison à la Terre.

Dans le cas où le plan de masse est formé d'un grillage métallique continu, celui-ci est de préférence également connecté aux moyens de liaison à la Terre.

Par contre, lorsque le plan de masse présente un caractère discontinu, celui est de préférence non connecté aux moyens de liaison à la Terre, étant donné que le plan de masse ne participe en principe pas à la conduction de la foudre.

L'invention concerne également une éolienne comprenant au moins une pale du type décrit ci-dessus.

Le cas échéant, les moyens de liaison à la Terre de la pale sont raccordés à la Terre.

L'invention concerne également un aéronef comprenant une peau extérieure aérodynamique intégrant au moins un dispositif du type décrit ci-dessus, dont ledit plan de masse est situé d'un côté intérieur de l'aéronef tandis que ledit ensemble de premiers éléments métalliques est situé d'un côté extérieur de l'aéronef.

De préférence, ledit dispositif relie au moins deux régions de la peau extérieure de l'aéronef formant des points d'entrée et de sortie privilégiés pour la foudre.

## BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :

- la figure 1 est une vue schématique d'une éolienne selon un mode de réalisation préféré de l'invention ;
- la figure 2 est une vue schématique en coupe transversale d'une pale de l'éolienne de la figure 1 ;
- la figure 3 est une vue schématique en perspective de la pale de la figure 2 ;
- la figure 4 est une vue schématique partielle en coupe d'un dispositif de protection contre la foudre intégré à la peau extérieure de la pale de la figure 2 ;
- la figure 5 est une vue schématique partielle de dessus d'un plan de masse appartenant au dispositif de la figure 4 ;
- les figures 6 et 7 sont des vues semblables à la figure 5 illustrant des variantes du plan de masse ;
- la figure 8 est une vue schématique partielle de dessus du dispositif de la figure 4 ;
- la figure 9 est une vue schématique d'un aéronef selon un mode de réalisation préféré de l'invention.

Dans l'ensemble de ces figures, des références identiques peuvent désigner des éléments identiques ou analogues.

## EXPOSÉ DÉTAILLÉ DE MODES DE RÉALISATION PRÉFÉRÉS

La figure 1 illustre une éolienne 10 comprenant de manière générale un mât 12, une nacelle 14 portée par le mât et logeant un moyeu de rotor 16 supportant des pales 18 et monté à rotation autour d'un axe de rotor 19. Chaque pale 18 comporte une base, par exemple de forme cylindrique, raccordée au moyeu de rotor 16, et se prolongeant en un profil aérodynamique effilé, d'une manière bien connue.

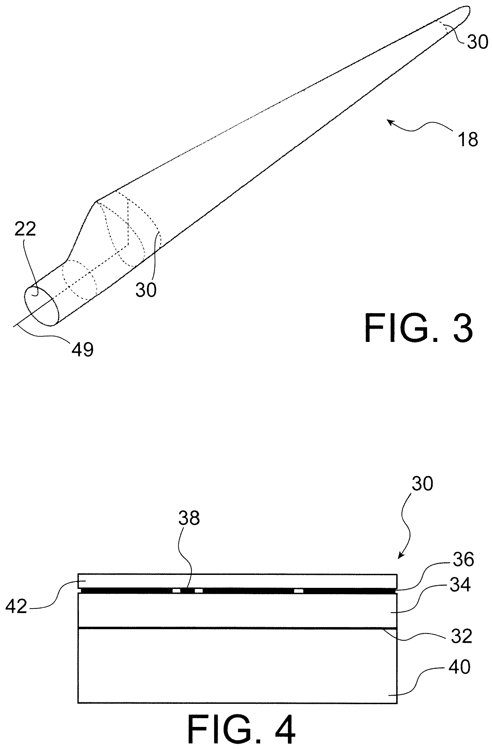

Les figures 2 et 3 illustrent grossièrement une pale 18 de l'éolienne 10, respectivement en coupe transversale et en perspective. La pale 18 est globalement formée d'un longeron 20 et d'une peau extérieure 22 aérodynamique solidaire du longeron 20 (figure 2). Le longeron 20 peut bien entendu être réalisé d'une seule pièce ou être formé de plusieurs sections assemblées bout-à-bout. De plus, l'invention n'est pas limitée à une pale comportant un unique longeron. Ainsi, la pale 18 peut comporter plusieurs longerons parallèles, par exemple deux longerons.

La peau extérieure 22 de la pale intègre un dispositif de protection contre la foudre 30, formé d'un empilement visible sur la figure 4, comprenant un plan de masse 32, d'un substrat diélectrique 34 disposé sur le plan de masse 32, ainsi qu'un ensemble de premiers éléments métalliques 36 et une grille métallique 38 disposés sur le substrat diélectrique. Le plan de masse 32 est situé du côté intérieur de la pale 22 tandis que l'ensemble de premiers éléments métalliques 36 est situé du côté extérieur de la pale.

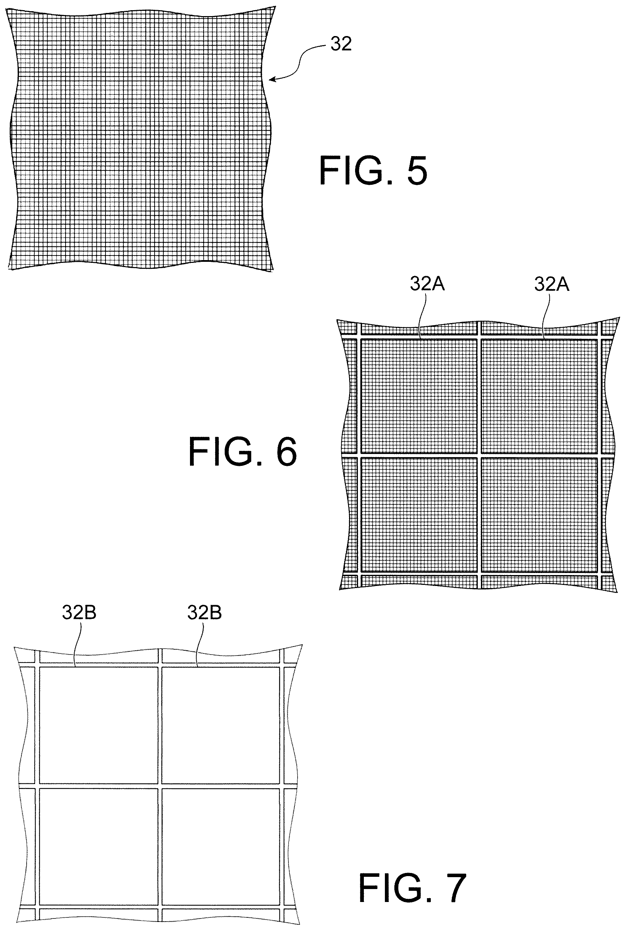

Dans l'exemple illustré, le plan de masse 32 prend la forme d'un grillage réalisé en un matériau métallique, tel que du cuivre, et s'étendant de manière continue, comme le montre la figure 5. La dimension des mailles de ce grillage est de préférence inférieure à 3 mm. Une telle finesse en ce qui concerne le plan de masse 32 permet la réflexion de rayonnements électromagnétiques de fréquence inférieure à 10 Ghz environ.

En variante, le plan de masse 32 peut être formé d'une feuille de métal expansé.

Le grillage ou la feuille de métal expansé formant le plan de masse 32 présente par exemple une densité surfacique de 80 g/m² environ.

Dans l'exemple illustré sur la figure 5, le plan de masse 32 est continu.

En variante, ce plan de masse peut être discontinu. Dans ce cas, le plan de masse 32 peut être formé d'un ensemble de portions de grillage 32A, par exemple de forme carrée ou rectangulaire, régulièrement espacées les unes des autres, comme représenté sur la figure 6.

Dans une autre variante, le plan de masse discontinu peut être formé d'une pluralité de seconds éléments métalliques 32B, par exemple de forme carrée ou rectangulaire, régulièrement espacés les uns des autres, comme représenté sur la figure 7.

Dans les cas où le plan de masse est discontinu, le plan de masse présente de préférence une forme complémentaire de la grille métallique 38, c'est-à-dire que chacune des portions de grillage 32A ou chacun des seconds éléments métalliques 32B présente une forme correspondant à l'espace délimité par une maille de la grille métallique 38.

En variante encore, le plan de masse peut être constitué d'une couche de matériau composite plastique renforcé par des fibres de carbone (CFRP). Le dispositif de protection contre la foudre peut ainsi tirer parti des propriétés de conduction électrique de fibres de carbone éventuellement intégrées à la peau extérieure 22 de la pale d'éolienne, notamment lorsque l'éolienne considérée comprend des pales de grandes dimensions, c'est à dire de longueur supérieure à 60 mètres.

Dans tous les cas, le plan de masse présente une structure ajourée qui permet la diffusion de résine au travers de celui-ci, ce qui est avantageux pour la fabrication du dispositif de protection 30 et de la pièce sur laquelle ce dispositif est agencé, comme cela apparaîtra plus clairement dans ce qui suit.

Par ailleurs, le substrat diélectrique 34 est par exemple constitué d'une couche de matériau composite plastique renforcé par des fibres de verre (GFRP), par exemple d'épaisseur égale à 1 mm environ. La matrice du matériau composite est par exemple constituée de résine époxy.

En outre, la peau extérieure 22 de la pale comporte de préférence une couche relativement épaisse de matériau composite 40, par exemple également du type plastique renforcé par des fibres de verre ou de carbone, sur laquelle est disposé le dispositif de protection contre la foudre 30.

Enfin, le dispositif de protection contre la foudre 30 est avantageusement recouvert d'un revêtement de protection tel qu'une couche de peinture 42, d'épaisseur par exemple égale à 300 µm environ. Cette couche de peinture est de préférence munie d'ajours (non visibles sur la figure 3) laissant certains des premiers éléments métalliques 36 à découvert de manière à favoriser l'accroche de la foudre sur ces derniers.

Les premiers éléments métalliques 36 sont par exemple réalisés en cuivre et prennent par exemple la forme de plaquettes relativement minces, dont l'épaisseur est de préférence comprise entre 15 µm et 70 µm, et est par exemple égale à 35 µm. Chaque élément métallique 36 peut être de forme quelconque, par exemple polygonale ou circulaire, et est de préférence de forme rectangulaire ou carrée.

Comme le montre la figure 7, les premiers éléments métalliques 36 sont agencés sous la forme de motifs semblables 44 de forme sensiblement carrée, chaque motif s'étendant dans l'espace correspondant à une maille de la grille métallique 38, en étant centré dans ledit espace. Autrement dit, la grille métallique 38 est formée d'un entrecroisement de pistes métalliques 46 et 48 agencées sur le substrat diélectrique et cheminant entre les motifs 44 formés par des premiers éléments métalliques 36. Chacune des pistes métalliques 46 et 48 présente par exemple une largeur de 1 mm environ.

Chaque élément métallique 36 est espacé de chacun de ses voisins d'une distance comprise entre 0,01 mm et 10 mm, comme cela apparaîtra plus clairement dans ce qui suit. Une telle distance est en effet apparue comme optimale pour permettre un glissement de la foudre de proche en proche sur les premiers éléments métalliques 36. La foudre peut ainsi être déviée jusqu'à un dispositif récepteur adapté, sans endommager la peau extérieure 22 de la pale.

Dans l'exemple illustré sur les figures, la grille métallique 38 est raccordée électriquement à un dispositif de liaison à la Terre intégré au moyeu de rotor 16 et au mât 12 de l'éolienne (ce dispositif de liaison à la Terre n'étant pas visible sur les figures). La connexion de la grille métallique 38 au dispositif de liaison à la Terre est par exemple réalisée par l'intermédiaire d'un câble de descente 49 logé dans la base de la pale (figure 3).

De plus, des premiers éléments métalliques 36 situés à une extrémité du dispositif de protection contre la foudre 30 de la pale du côté du moyeu de rotor 16 sont également raccordés électriquement au dispositif de liaison à la Terre. Le dispositif de liaison à la Terre forme ainsi le dispositif récepteur précité, par lequel la foudre peut être canalisée jusqu'à la Terre.

De préférence, le plan de masse 32 est également relié au dispositif de liaison à la Terre, par exemple par l'intermédiaire du câble de descente 49.

Ainsi, lorsque la foudre frappe le dispositif de protection 30, plusieurs canaux de passage du courant électrique peuvent être mis en oeuvre, d'une part au sein de la grille métallique 38 et d'autre part de proche en proche par l'intermédiaire des premiers éléments métalliques 36, jusqu'au dispositif de liaison à la Terre. Au lieu de pénétrer dans la peau extérieure 22 de la pale, la foudre glisse sur le dispositif de protection 30 jusqu'au dispositif de liaison à la Terre. Le risque d'endommagement de la peau extérieure 22 se trouve ainsi réduit. De plus, le dispositif de protection 30 n'inclut aucun élément conducteur électrique dans le volume interne de la pale, ce qui permet d'éviter les risques d'arcs électriques internes rencontrés dans les pales d'éolienne de l'art antérieur.

Par ailleurs, du fait de sa structure, le dispositif de protection contre la foudre 30 procure un effet d'absorption des ondes électromagnétiques dans une bande de fréquence déterminée.

En effet, chaque élément métallique 36 agit comme une antenne planaire passive.

Ainsi, un élément métallique de forme rectangulaire présente une fréquence de résonance électromagnétique $f_r$ qui, au premier ordre, est approximativement égale à :

$$f_r = \frac{c_0}{2\sqrt{L^2 + W^2}\sqrt{\mu_r \varepsilon_r}}$$

où :

$f_r$ est la fréquence de résonance d'ordre zéro de l'élément métallique 36,
$c_0$ est la vitesse de la lumière dans le vide,
L est la longueur de l'élément métallique 36,
W est la largeur de l'élément métallique 36,
$\mu_r$ est la perméabilité relative du substrat diélectrique 34,
$\varepsilon_r$ est la permittivité relative du substrat diélectrique 34.

Selon un principe de l'invention, les motifs 44 formés de premiers éléments métalliques 36 comportent chacun des premiers éléments métalliques de dimensions différentes correspondant respectivement à des fréquences de résonance électromagnétique différentes. La juxtaposition de ces fréquences de résonance permet de définir une bande d'absorption électromagnétique élargie du motif.

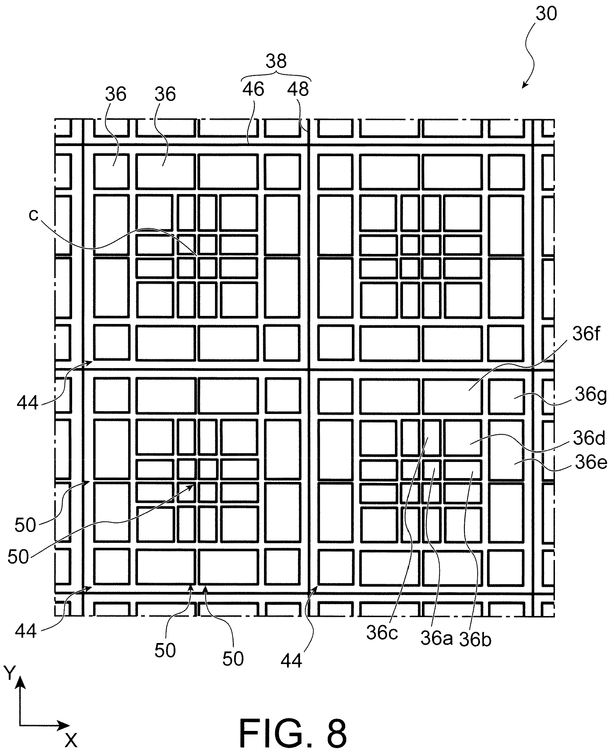

Dans l'exemple particulièrement performant illustré sur la figure 8, chaque motif 44 est de forme générale carrée et est formé de quatre sous-motifs élémentaires 50 régulièrement répartis autour d'un centre C du motif 44 de sorte que le motif 44 soit symétrique par rapport audit centre. Chaque sous-motif élémentaire 50 est ainsi semblable aux autres sous-motifs élémentaires et résulte d'une rotation de 90 degrés de chacun des deux sous-motifs élémentaires qui lui sont adjacents au sein du motif 44.

Dans chaque motif 44, l'un des sous-motifs élémentaires 50 comporte sept premiers éléments métalliques agencés de la manière suivante, par référence aux directions X et Y de la figure 8 :

- un premier élément métallique 36a, de forme carrée, disposé dans le coin du sous-motif élémentaire proche du centre du motif 44, dont la longueur du côté est égale à 5,25 mm;
- un deuxième élément métallique 36b, de forme rectangulaire, s'étendant au droit du premier élément métallique 36a en direction des cotes X croissantes en étant espacé de ce dernier d'une distance égale à 0,6 *mm* selon la direction X, et ayant pour étendue 10,55 mm selon la direction X et 5,25 mm selon la direction Y ;

- un troisième élément métallique 36c, de forme rectangulaire, s'étendant au droit du premier élément métallique 36a en direction des cotes Y croissantes en étant espacé de ce dernier d'une distance égale à 0,6 *mm* selon la direction Y, et ayant pour étendue 5,25 mm selon la direction X et 10,55 mm selon la direction Y ;
- un quatrième élément métallique 36d, de forme carrée, s'étendant au droit du deuxième élément métallique 36b en direction des cotes Y croissantes en étant espacé de ce dernier d'une distance égale à 0,6 *mm* selon la direction Y et au droit du troisième élément métallique 36c en direction des cotes X croissantes en étant espacé de ce dernier d'une distance égale à 0,6 mm selon la direction X, et dont la longueur du côté est égale à 10,55 *mm;*
- un cinquième élément métallique 36e, de forme rectangulaire, s'étendant au droit du deuxième élément métallique 36b et du quatrième élément métallique 36d en direction des cotes X croissantes en étant espacé de ces derniers d'une distance égale à 2,4 mm selon la direction X, et ayant pour étendue 10,60 mm selon la direction X et 15,83 mm selon la direction Y ;

- un sixième élément métallique 36f, de forme rectangulaire, s'étendant au droit du troisième élément métallique 36c et du quatrième élément métallique 36d en direction des cotes Y croissantes en étant espacé de ces derniers d'une distance égale à 2,4 *mm* selon la direction Y, et ayant pour étendue 15,83 mm selon la direction X et 10,60 mm selon la direction Y ;

- un septième élément métallique 36g, de forme carrée, s'étendant au droit du cinquième élément métallique 36e en direction des cotes Y croissantes en étant espacé de ce dernier d'une distance égale à 2,4 *mm* selon la direction Y et au droit du sixième élément métallique 36f en direction des cotes X croissantes en étant espacé de ce dernier d'une distance égale à 2,4 mm selon la direction X, et dont la longueur du côté est égale à 10,60 mm.

En outre, le quatrième élément métallique 36d et le septième élément métallique 36g sont espacés de la piste 48 la plus proche appartenant à la grille métallique 38, et parallèle à la direction Y, d'une distance égale à 2,4 *mm*. De manière analogue, le sixième élément métallique 36f et le septième élément métallique 36g sont espacés de la piste 46 la plus proche appartenant à la grille métallique 38, et parallèle à la direction X, d'une distance égale à 2,4 *mm.*

Les trois autres sous-motifs élémentaires 50 du motif 44 se déduisent du sous-motif élémentaire décrit ci-dessus par rotations successives de ce dernier de 90 degrés dans le sens antihoraire.

Les premiers éléments métalliques 36a, 36b et 36e de chaque sous-motif élémentaire sont séparés des premiers éléments métalliques adjacents 36a, 36d et 36f d'un autre sous-motif élémentaire par une distance égale à 0,6 *mm.*

L'agencement des premiers éléments métalliques 36 décrit ci-dessus permet par exemple d'obtenir une atténuation des ondes électromagnétiques supérieure à 20 dB dans une bande de fréquence centrée sur la fréquence de 5,7 GHz environ et de largeur égale à 1 GHz environ.

La pale d'éolienne 18 peut être réalisée au moyen d'un procédé comprenant les étapes consistant à :

- empiler successivement les fibres du substrat diélectrique 34, le plan de masse 32, et les fibres de la couche de matériau composite 40, sur l'ensemble de premiers éléments métalliques 36 et la grille métallique 38, puis
- infuser de la résine au travers de l'ensemble ainsi formé, puis
- polymériser la résine de manière à solidifier l'ensemble, puis
- appliquer des couches de finition (typiquement de la peinture) sur l'ensemble ainsi constitué.

Le caractère ajouré du plan de masse 32 permet ainsi de réaliser le dispositif de protection 30 conjointement avec la couche de matériau composite 40 sur laquelle le dispositif est agencé, d'une manière particulièrement simple.

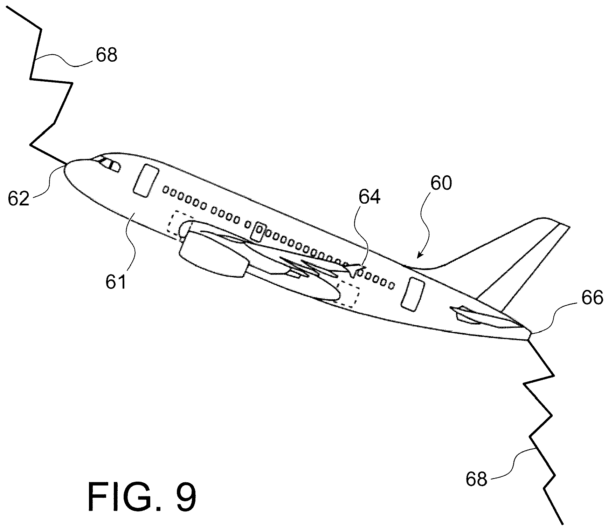

La figure 9 illustre un aéronef 60 dont la peau extérieure du fuselage et de la voilure est recouverte d'un dispositif de protection contre la foudre 61 semblable au dispositif décrit ci-dessus. Ce dispositif s'étend en particulier depuis le nez 62 de l'aéronef, jusqu'aux extrémités 64 des ailes et jusqu'à la pointe arrière 66 de l'aéronef. Ces zones constituent en effet des points d'entrée et de sortie privilégiés pour la foudre. De manière analogue à ce qui est décrit ci-dessus en ce qui concerne l'éolienne 10, le plan de masse 32 est situé du côté intérieur de l'aéronef 60 tandis que l'ensemble de premiers éléments métalliques 36 est situé du côté extérieur de l'aéronef 60.

Le dispositif de protection contre la foudre 61 permet à la foudre 68 de glisser de proche en proche sur les premiers éléments métalliques du dispositif, depuis un point d'entrée privilégié tel que le nez 62 de l'aéronef jusqu'à un point de sortie privilégié tel que la pointe arrière 66 de l'aéronef, sans endommager la structure de l'aéronef, et tout en réduisant la signature RADAR de l'aéronef.

**Revendications**

1. Dispositif de protection contre la foudre (30, 61) destiné à former au moins une partie d'une surface externe (22) d'une structure (18, 60) à protéger, **caractérisé en ce qu'**il comprend un plan de masse (32), un substrat diélectrique (34) agencé sur le plan de masse, et un ensemble de premiers éléments métalliques (36) agencés sur le substrat diélectrique (34) et s'étendant de manière sensiblement parallèle au plan de masse (32), de sorte que tout couple d'éléments consécutifs parmi lesdits premiers éléments métalliques (36) est séparé d'une distance comprise entre 0,01 millimètre et 10 millimètres, lesdits premiers éléments métalliques étant répartis en des motifs semblables (44) juxtaposés, chacun desdits motifs comportant des premiers éléments métalliques de dimensions différentes (36a, 36b, 36c, 36d, 36e, 36f, 36g) correspondant respectivement à des fréquences de résonance électromagnétique différentes dont la juxtaposition définit une bande d'absorption électromagnétique du motif.

2. Dispositif de protection contre la foudre selon la revendication 1, dans lequel tout couple d'éléments consécutifs parmi lesdits premiers éléments métalliques (36) d'un même motif (44) est séparé d'une distance comprise entre 0,3 millimètre et 3 millimètres.

3. Dispositif de protection contre la foudre selon l'une quelconque des revendications 1 ou 2, comprenant en outre une grille métallique (38) formée d'un entrecroisement de pistes métalliques (46, 48) agencées sur le substrat diélectrique (34) entre lesdits premiers éléments métalliques (36).

4. Dispositif de protection contre la foudre selon la revendication 3, dans lequel lesdites pistes métalliques (46, 48) s'étendent entre lesdits motifs (44).

5. Dispositif de protection contre la foudre selon l'une quelconque des revendications 1 à 4, dans lequel le plan de masse (32) est formé d'un grillage métallique continu.

6. Dispositif de protection contre la foudre selon l'une quelconque des revendications 1 à 4, dans lequel le plan de masse est formé d'un ensemble de portions de grillage (32A) espacées les unes des autres à intervalle régulier.

7. Dispositif de protection contre la foudre selon l'une quelconque des revendications 1 à 4, dans lequel le plan de masse est formé d'une pluralité de seconds éléments métalliques (32B) espacés les uns des autres à intervalle régulier.

8. Pale (18) pour éolienne, comprenant une peau extérieure (22) aérodynamique, **caractérisée en ce que** ladite peau extérieure intègre au moins un dispositif de protection contre la foudre (30) selon l'une quelconque des revendications 1 à 7, dont ledit plan de masse (32) est situé d'un côté intérieur de la pale tandis que ledit ensemble de premiers éléments métalliques (36) est situé d'un côté extérieur de la pale.

9. Pale selon la revendication 8, comprenant des moyens de liaison à la Terre, et dans laquelle le dispositif de protection contre la foudre (30) est conforme à la revendication 3 ou 4, et la grille métallique (38) est connectée aux moyens de liaison à la Terre.

10. Pale selon la revendication 8, comprenant des moyens de liaison à la Terre, et dans laquelle le dispositif de protection contre la foudre (30) est conforme à la revendication 5, et le grillage métallique formant le plan de masse (32) est connecté aux moyens de liaison à la Terre.

11. Éolienne (10), **caractérisée en ce qu'**elle comprend au moins une pale (18) selon l'une quelconque des revendications 8 à 10.

12. Aéronef (60), comprenant une peau extérieure aérodynamique, **caractérisé en ce que** ladite peau extérieure intègre au moins un dispositif (61) selon l'une quelconque des revendications 1 à 7, dont ledit plan de masse est situé d'un côté intérieur de l'aéronef tandis que ledit ensemble de premiers éléments métalliques est situé d'un côté extérieur de l'aéronef.

13. Aéronef selon la revendication 12, dans lequel ledit dispositif (61) relie au moins deux régions (62, 64, 66) de la peau extérieure de l'aéronef formant des points d'entrée et de sortie privilégiés pour la foudre.

**Patentansprüche**

1. Blitzschutzvorrichtung (30, 61) zum Ausbilden mindestens eines Teils einer Außenfläche (22) einer zu schützenden Struktur (18, 60), **dadurch gekennzeichnet, dass** sie eine Masseebene (32), ein dielektrisches Substrat (34), das auf der Masseebene angeordnet ist, und eine Anordnung erster Metallelemente (36), die auf dem dielektrischen Substrat (34) angeordnet sind und sich im Wesentlichen parallel zur Masseebene (32) erstrecken, umfasst, so dass jedes Paar aufeinanderfolgender Elemente aus den ersten Metallelementen (36) durch einen Abstand zwischen 0,01 Millimeter und 10 Millimeter getrennt ist, wobei die ersten Metallelemente in ähnlichen Mustern (44) nebeneinander angeordnet sind, wobei jedes der Muster, das die ersten Metallelemente mit unterschiedlichen Abmessungen (36a, 36b, 36c, 36d, 36e, 36f, 36g) umfasst, verschiedenen elektromagnetischen Resonanzfrequenzen entspricht, deren Anreihung eine elektromagnetische Absorptionsbande des Musters definiert.

2. Blitzschutzvorrichtung nach Anspruch 1, wobei jedes Paar aufeinanderfolgender Elemente aus den ersten Metallelementen (36) eines gleichen Musters (44) durch einen Abstand zwischen 0,3 Millimeter und 3 Millimeter getrennt ist.

3. Blitzschutzvorrichtung nach einem der Ansprüche 1 oder 2, ferner umfassend ein Metallgitter (38), das aus einem Geflecht von Metallbahnen (46, 48) ausgebildet ist, die auf dem dielektrischen Substrat (34) zwischen den ersten Metallelementen (36) angeordnet sind.

4. Blitzschutzvorrichtung nach Anspruch 3, wobei sich die Metallbahnen (46, 48) zwischen den Mustern (44) erstrecken.

5. Blitzschutzvorrichtung nach einem der Ansprüche 1 bis 4, wobei die Masseebene (32) aus einem kontinuierlichen Metallgitternetz gebildet ist.

6. Blitzschutzvorrichtung nach einem der Ansprüche 1 bis 4, wobei die Masseebene aus einer Anordnung von Gitternetzabschnitten (32A) gebildet ist, die in regelmäßigen Abständen voneinander angeordnet sind.

**7.** Blitzschutzvorrichtung nach einem der Ansprüche 1 bis 4, wobei die Masseebene aus mehreren zweiten Metallelementen (32B) gebildet ist, die in regelmäßigen Abständen voneinander angeordnet sind.

**8.** Windturbinenschaufel (18), umfassend eine aerodynamische Außenhaut (22), **dadurch gekennzeichnet, dass** in die Außenhaut mindestens eine Blitzschutzvorrichtung (30) nach einem der Ansprüche 1 bis 7 integriert ist, deren Masseebene (32) an einer Innenseite der Schaufel liegt, während die Anordnung erster Metallelemente (36) an einer Außenseite der Schaufel liegt.

**9.** Schaufel nach Anspruch 8, umfassend Erdungseinrichtungen, und wobei die Blitzschutzvorrichtung (30) Anspruch 3 oder 4 entspricht und das Metallgitter (38) mit den Erdungseinrichtungen verbunden ist.

**10.** Schaufel nach Anspruch 8, umfassend Erdungseinrichtungen, und wobei die Blitzschutzvorrichtung (30) Anspruch 5 entspricht und das Metallgitternetz, das die Masseebene (32) bildet, mit den Erdungseinrichtungen verbunden ist.

**11.** Windturbine (10), **dadurch gekennzeichnet, dass** sie mindestens eine Schaufel (18) nach einem der Ansprüche 8 bis 10 umfasst.

**12.** Flugzeug (60), umfassend eine aerodynamische Außenhaut, **dadurch gekennzeichnet, dass** in die Außenhaut mindestens eine Vorrichtung (61) nach einem der Ansprüche 1 bis 7 integriert ist, deren Masseebene an einer Innenseite des Flugzeugs liegt, während die Anordnung erster Metallelemente an einer Außenseite des Flugzeugs liegt.

**13.** Flugzeug nach Anspruch 12, wobei die Vorrichtung (61) mindestens zwei Bereiche (62, 64, 66) der Außenhaut des Flugzeugs verbindet, die bevorzugte Eintritts- und Austrittspunkte für Blitzschläge bilden.

**Claims**

**1.** Lightning protection device (30, 61), said device being intended to form at least a portion of an external surface (22) of a structure (18, 60) to be protected, **characterised in that** it comprises a ground plane (32), a dielectric substrate (34) arranged on the ground plane, and an array of first metal elements (36) arranged on the dielectric substrate (34) and extending substantially parallel to the ground plane (32) in such a way that any pair of consecutive elements from said first metal elements (36) is separated by a distance of between 0.01 millimetres and 10 millimetres, said first metal elements being distributed in juxtaposed similar patterns (44), each of said patterns including first metal elements with different dimensions (36a, 36b, 36c, 36d, 36e, 36f, 36g) corresponding to different electromagnetic resonant frequencies, the juxtaposition of which defines an electromagnetic absorption band of the pattern.

**2.** Lightning protection device according to claim 1, in which every pair of consecutive elements among said first metal elements (36) of a same pattern (44) is separated by a distance between 0.3 millimetres and 3 millimetres.

**3.** Lightning protection device according to either claim 1 or 2, also comprising a metal grid (38) formed from interlacing of metal strips (46, 48) formed on the dielectric substrate (34) between said first metal elements (36).

**4.** Lightning protection device according to claim 3, in which said metal tracks (46, 48) extend between said patterns (44).

**5.** Lightning protection device according to any one of claims 1 to 4, in which the ground plane (32) is formed from a continuous metal grating.

**6.** Lightning protection device according to any one of claims 1 to 4, in which the ground plane is formed from a set of grating portions (32A) at a uniform spacing from each other.

**7.** Lightning protection device according to any one of claims 1 to 4, in which the ground plane is formed from a plurality of second metal elements (32B) at equal spacings from each other.

**8.** Blade (18) for a wind turbine, comprising an aerodynamic external skin (22), **characterised in that** said external skin integrates at least one lightning protection device (30) according to any one of claims 1 to 7, of which said ground plane (32) is located on an inner side of the blade while said set of first metal elements (36) is located on an outer side of the blade.

**9.** Blade according to claim 8, including earth connection means and in which the lightning protection device (30) complies with claim 3 or 4, and the metal grid (38) is connected to the earth connection means.

**10.** Blade according to claim 8, including earth connection means and in which the lightning protection device (30) complies with claim 5, and the metal grating forming the ground plane (32) is connected to the earth connection means.

**11.** Wind turbine (10), **characterised in that** it comprises at least one blade (18) according to any one of claims 8 to 10.

12. Aircraft (60), comprising an aerodynamic external skin (22), **characterised in that** said external skin integrates at least one device (61) according to any one of claims 1 to 7, of which said ground plane is located on an inner side of the aircraft while said set of first metal elements is located on an outer side of the aircraft.

13. Aircraft according to claim 12, in which said device (61) connects at least two regions (62, 64, 66) of the external skin of the aircraft forming preferred entry and exit points for lightning.

EP 3 172 132 B1

FIG. 1

FIG. 2

10

30

18

22

30

49

# FIG. 3

30

38

36

34

42

32

40

# FIG. 4

32

FIG. 5

32A          32A

FIG. 6

32B          32B

FIG. 7

FIG. 8

FIG. 9

**EP 3 172 132 B1**

## RÉFÉRENCES CITÉES DANS LA DESCRIPTION

**Documents brevets cités dans la description**

- WO 2013097855 A